# EUROPEAN PATENT APPLICATION

(11) **EP 2 302 205 A1**
(43) Date of publication of application: **30.03.2011**
(21) Application number: 09171708.2
(22) Date of filing: 29.09.2009
(51) Int. Cl.: F03B 17/06, F03D 3/00, F03D 9/00

(54) **Floating power plant comprising water turbine and wind turbine**

(71) Applicant: The Monobuoy Company Ltd., North Thoresby Lincolnshire DN36 5QP (GB)
(72) Inventor: Collard, David, North Thoresby Lincolnshire DN36 5QP (GB)
(74) Representative: Rees, Alexander Ellison

(57) **Abstract**

An electrical power generating system comprises a wind turbine supported by a support means, an underwater structure able to rotate relative to the support means, a power transfer system; and an electrical generator, wherein the power transfer system is able to transfer power from the wind turbine to drive the generator to generate electricity and is also able to transfer power from the wind turbine to drive the underwater structure to rotate.

## Description

This invention relates to improvements to power generation, and in particular to improvements to power generation in a marine environment.

There is general agreement that it is desirable to increase the amount of electrical power generated from renewable or sustainable sources, and it has been proposed to attempt to meet this need by the use of electrical generators driven by wind turbines, or by using water turbines driven by tidal currents. However, a number of problems have been encountered with these approaches.

In order to generate large amounts of power conventional wind turbines must be large and tall so that they have are often objected to as having an unacceptable visual impact. Further, in the event of failure of the wind turbine there is a risk of injury or damage to nearby persons or buildings. As a result it is often difficult to locate suitable sites for large wind turbines in populous areas. In order to overcome these problems wind turbines have been located at sea, but constructing a tower on the sea bed for the wind turbine is time consuming and costly. Further, power generation by wind turbines is only possible over a limited range of windspeeds, rendering the supply of power unreliable.

Water turbines driven by tidal currents generally also require large fixed support structures such as barrages. This makes installation of the water turbine time consuming and expensive and limits the locations where they can be placed because of the impact on other marine activity, such as shipping and fishing, and the marine environment. The impact of water turbines could be reduced by locating the water turbines on the sea bed, but this makes underwater construction, inspection and maintenance of the water turbine difficult and costly.

The present invention was made in an attempt to solve these problems, at least in part.

In a first aspect, the present invention provides an electrical power generating system comprising: a wind turbine; a support means supporting the wind turbine; an underwater structure able to rotate relative to the support means; a power transfer system; and an electrical generator; wherein the power transfer system is able to transfer power from the wind turbine to drive the generator to generate electricity; and the power transfer system is able to transfer power from the wind turbine to drive the underwater structure to rotate.

Preferably, the support means is a flotation body.

Preferably, the system comprises a buoy.

Preferably, the system comprises a moored buoy.

Preferably, the underwater structure is a water turbine and the power transfer system is also able to transfer power from the water turbine to drive the generator to generate electricity.

Preferably, the power transfer system is also able to transfer power from the water turbine to drive the wind turbine.

Preferably, the wind turbine is a vertical axis wind turbine.

Preferably the water turbine is a vertical axis turbine and the wind turbine and water turbine are coaxial.

Preferably, the wind turbine is a Darrieus turbine.

In a second aspect, the present invention provides an electrical power generating buoy comprising: a water turbine; a floatation body supporting the water turbine; a power transfer system; and an electrical generator; wherein the power transfer system is able to transfer power from the water turbine to drive the generator to generate electricity.

Preferably, the system is moored in water using a Catenary Anchor Leg Mooring 'CALM' arrangement.

Preferably, the water turbine is a vertical axis turbine.

Preferably, the water turbine is a Darrieus turbine.

Preferably, the power transfer system is hydraulic.

A preferred embodiment of the invention will now be described with reference to the accompanying figures in which:

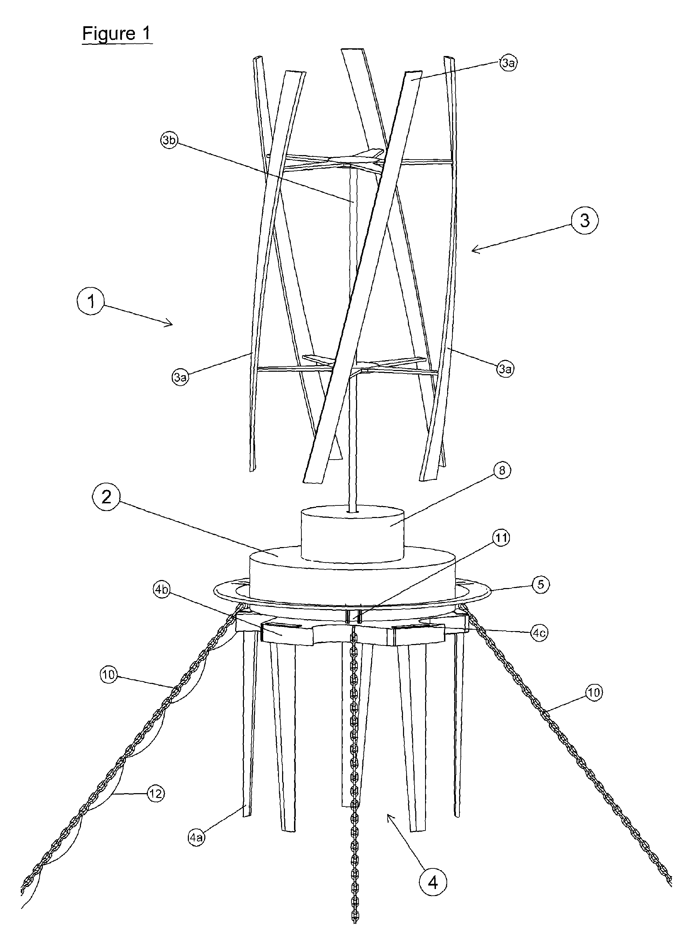

Figure 1 shows a perspective view of a power generation buoy;
Figure 2 shows a side view of the power generation buoy of figure 1;
Figure 3 shows a bottom plan view of the power generation buoy of figure 1;
Figure 4 shows a schematic diagram of the operating parts of the power generation buoy of figure 1;
Figure 5 shows details of the power transfer system of figure 4;
Figure 6 shows a graph of power production for a wind turbine of the power buoy of figure 1; and
Figure 7 shows a graph of power production for a water turbine of the power buoy of figure 1.

A power generation buoy 1 according to a first embodiment of the invention is shown in the figures. The buoy 1 comprises a buoy hull 2 providing buoyancy, a Darrieus vertical axis wind turbine 3 extending upwardly above the hull 2, and a Darrieus vertical axis water turbine 4 extending downwardly below the hull 2. The wind turbine 3 and the water turbine 4 are coaxial and are arranged to rotate in opposite directions when driven by the wind and by water currents respectively. However, this is not essential and the wind turbine 3 and the water turbine 4 could be arranged to rotate in the same direction.

The buoy hull 2 is a circular cylinder, but other shapes of hull may be used. The buoy hull 2 is preferably made of welded steel, but other materials, for example concrete or glass reinforced plastic (GRP) could be used. In order to provide resistance to sinking in the event of accidental damage the buoy hull 2 is internally divided into a plurality of separate sealed compartments, although this is not essential, particularly if the buoy 1 is small. Additionally, or alternatively, some or all of the buoy hull 2 can be filled with foam to provide resistance to sinking.

The vertical axis water turbine 4 extending below the buoy hull 2 acts as a keel for the buoy 1, acting to damp rolling and pitching of the buoy 1 and increasing the righting moment of the buoy 1.

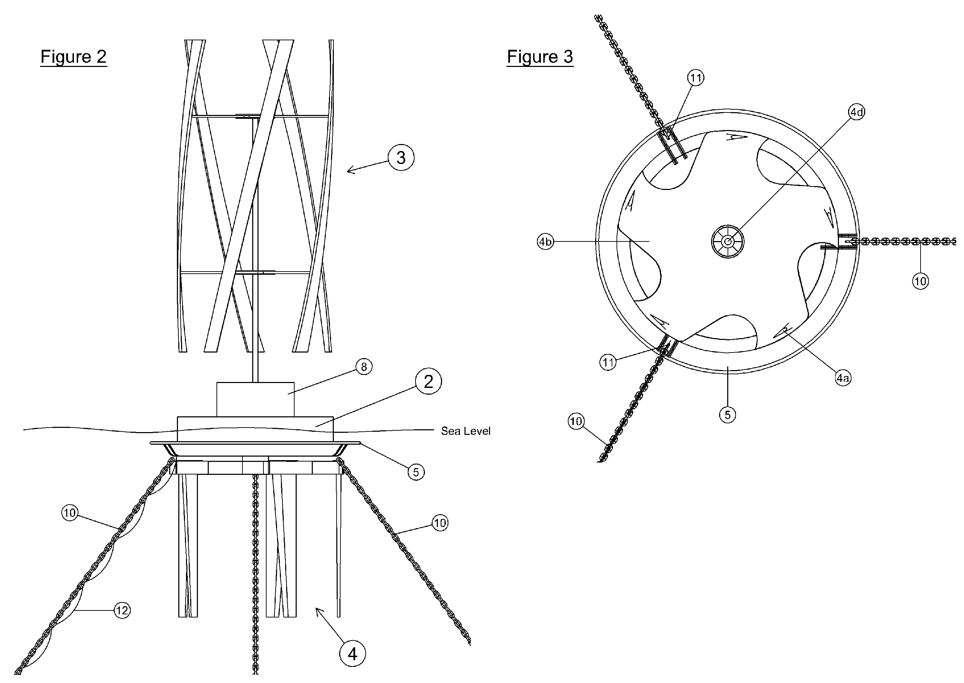

The buoy hull 2 is surrounded by a circular skirt fender 5 to protect the buoy hull 2 and the water turbine 4 in the event of collision of another vessel with the buoy 1. The skirt fender 5 is arranged so that it is submerged when the buoy 1 is in use, as shown in figure 2. The use of a fender is not essential, and other types of fender could be used.

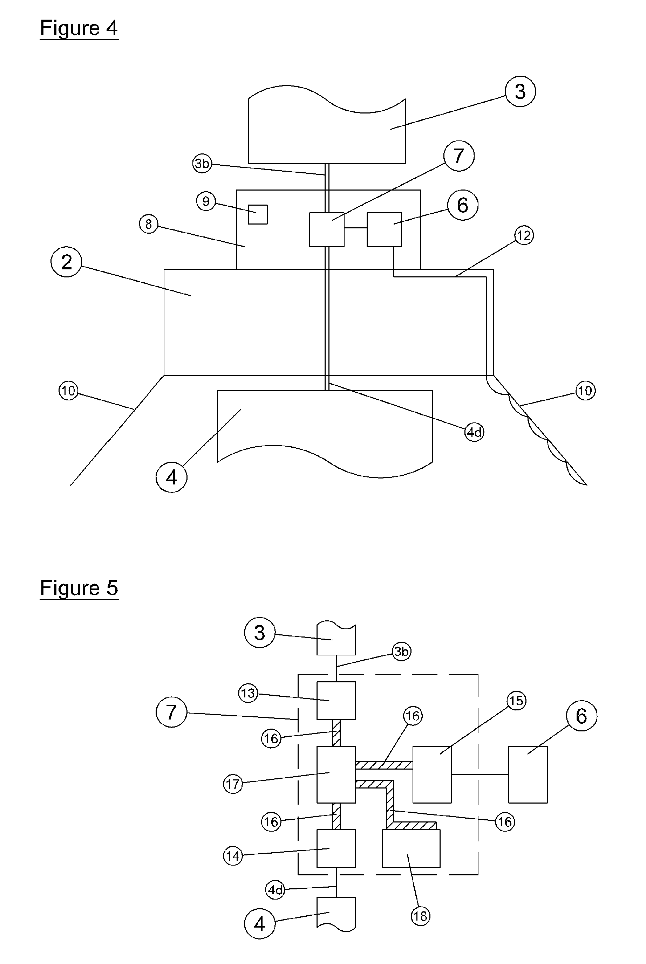

As shown in figure 4 the buoy 1 further comprises an electrical generator 6. Preferably the electrical generator 6 is an asynchronous generator generator that runs faster than the frequency of the power network to which the buoy 1 supplies power. The wind turbine 3 and the water turbine 4 are both connected to the generator 6 through a hydraulic power transmission system 7 which transmits power from each of the turbines 3 and 4 to the generator 6 so that rotation of the wind turbine 3 and water turbine 4 can be used to drive the generator 6 and generate electrical power. The power transfer system 7 and the generator 6 are located within a waterproof housing 8 mounted on top of the buoy hull 2.

The use of a hydraulic power transmission system 7 is preferred because hydraulic systems are robust and reliable and require little maintainance, even in marine enviroments, and are simple to maintain and repair. Further, the use of a hydraulic power transmission system 7 will maximise the range of construction facilities around the world which will be able to manufacture the buoy 1. Alternative power transmission systems could be used, for example a mechanical belt and variable pulley system.

The operation of the electrical generator 6 and power transmission system 7, and the operation of other systems of the buoy 1, are controlled by a central control system 9 comprising an electronic computer. The control system 9 is provided with inputs from sensors detecting operating parameters of the various parts of the buoy 1 and enviromental conditions around the buoy. The control system 9 is programmed with acceptable operating limits for the buoy 1 and can shut down operation of the buoy 1 if these limits are exceeded, for example during extreme weather conditions. Conveniently, the control system 9 is located in the waterproof housing 8 on top of the buoy hull 2. Other control arrangements could be used.

In use, the buoy 1 is secured in position in the water at a suitable location subject to currents by three mooring chains 10 attached to the buoy 1 and to fixed anchors (not shown) on the sea bed in a conventional Catenary Anchor Leg Mooring (CALM) arrangement. The mooring chains 10 are each connected to the buoy hull 2 by a respective chainstopper or locking assembly 11. Each locking assembly 11 projects outwardly from the buoy hull 2 sufficiently far to ensure that the attached mooring chain 10 cannot come into contact with the water turbine 4.

A CALM arrangement is a well known and effective buoy mooring arrangement, but other mooring systems and arrangements could be used if preferred. The length of projection required, and whether any projection is required at all, will depend upon the relative sizes of the buoy hull 2 and the water turbine 4 and the geometry of the mooring arrangement used.

Three mooring chains 10 is the minimum required for a CALM mooring, but more mooring chains 10 could be used if necessary. As is usual practice for securing buoys the fixed anchors may be sea bed anchors or other types of fixing structure such as sea bed piles or the like. The term mooring chains is used for simplicity but any other suitable securing means can be used, for example synthetic ropes or wire ropes or cables.

The buoy 1 is connected to an exterior power network such as an electricity supply grid by a power cable 12 running down to and along the sea bed. Conveniently, the power cable 12 is supported by one of the mooring chains 10 to prevent the power cable 12 contacting the water turbine 4 and to protect the power cable 12 from accidental damage. In a CALM arrangement the mooring chains 10 slope outwardly away from the buoy 1. As a result, the power cable 12 supported by a mooring chain 10 is substantially protected from damage due to collisions with vessels or floating debris by the mooring chain 10.

The wind turbine 3 and the water turbine 4 are coaxial and are preferably arranged to rotate in opposite directions when driven by the wind and by water currents respectively in order to minimise the torque loads placed on the mooring arrangement by the buoy 1 when generating power. However, the wind turbine 3 and water turbine 4 could rotate in the same direction.

A Darrieus vertical axis wind turbine operates on the principle of lift being created by a rotating aerofoil section. The effect of the wind imparts an angle of attack on the aerofoil as it rotates. This angle of attack will create lift which fluctuates smoothly from zero to maximum to zero to maximum and back to zero one revolution. The lift force is directed perpendicular to the angle of attack of the aerofoil. The direction of this lift force is slightly forward of the turbine centreline, therefore a component of this lift force will impart a forward force on the aerofoil which in turn imparts a torque on the central shaft forcing the turbine to continue rotating. It should be noted that the basic Darrieus turbine needs to be spinning in order to produce lift and torque, therefore when the Darrieus turbine is stationary it requires an external force to initiate rotation. Once the Darrieus turbine is spinning it is self sustaining provided there is enough wind. A Darrieus vertical axis water turbine operates in the same manner except that it is driven by a water current instead of wind. The direction of rotation of a Darrieus turbine is determined by the shape and orientation of the turbine blades and is independent of the direction of flow of the air or water past the turbine.

The term vertical axis turbine is used to indicate that the turbine is intended to rotate about an axis perpendicular to the driving fluid flow, rather than rotating about an axis parallel to the driving fluid flow like a horizontal axis wind turbine such as a windmill. In the present invention the vertical axis turbines 3 and 4 will not generally be vertical in operation as the floating buoy 1 rolls and pitches due to wave and wind action.

In operation the wind turbine 3 is driven by the wind and the water turbine 4 is driven by a water current so that both turbines 3 and 4 can drive the generator 6 through the power transmission system 7 and produce electrical power, which is exported through the cable 12 to the external power network.

In addition to acting as a generator the generator 6 is also able to act as a motor, taking electrical power from the external power network through the power cable 12. Further, in addition to transfering power from the turbines 3 and 4 to the generator 6, the transmission system 7 is also able to transfer power between the turbines 3 and 4 and from the generator 6, when acting as a motor, to each of the turbines 3 and 4.

As is shown in figure 5 the hydraulic power transmission system 7 comprises a reversible hydraulic pump 13 connected to the wind turbine 3, a reversible hydraulic pump 13 connected to the water turbine 4 and a reversible hydraulic motor 15 connected to the generator 5. Although all of the hydraulic motors and pumps 13 to 15 are reversible the terms motor and pump are used to indicate the most common operation of the motor or pump during normal operation of the buoy 1. The pumps 13 and 14 and motor 15 are interconnected by hydraulic fluid lines 16 through valves 17. The pumps 13 and 14, motor 15 and valves 17 are controled by the control system 9 to carry out the power transfers between the wind turbine 3, water turbine 4 and generator 6 as discussed above. Further, in order to prevent overheating of the hydraulic fluid a cooler 18 is provided to carry out heat transfer from the hydraulic fluid to the seawater surrounding the buoy 1.

It will be understood by the skilled person that the hydraulic power transmission system 7 is only shown in outline in figure 5.

As explained above, a Darrieus vertical axis turbine is not self starting. If a Darrieus turbine is stationary, even when a fluid flow is acting on the turbine some external force must be applied to the turbine to begin rotation. Thus, if either, or both, of the wind turbine 3 and the water turbine 4 are stationary (not rotating) and a sufficient wind or current respectively for power generation is acting on the buoy 1, the transmission system 7 must be used to supply power to the, or each, stationary turbine 3 or 4 to drive rotation of the turbine 3 or 4 until the rotation is self-sustaining. If only one of the turbines 3 and 4 is stationary the power supplied by the transmission system 7 to the stationary turbine 3 or 4 can be taken from the other one of the turbine 3 and 4 if the other turbine 3 or 4 is generating sufficient power, or can be produced by the generator 6 acting as a motor. However, if both turbines 3 and 4 are stationary the power supplied by the transmission system 7 to the stationary turbine 3 or 4 must be provided by the generator 6 acting as a motor.

As an alternative to the generator 6 being driven by electrical power from the external power network when acting as a motor, the buoy 1 could include batteries to provide the necessary electrical power to drive the generator 6 as a motor in order to start the or each Darrieus turbine 3 or 4. The batteries can be charged by the generator 6 when the generator 6 is being driven by one or both of the turbines 3 and 4.

One problem encountered when using wind turbines to generate power is that wind turbines can generally only safely operate and generate power over a limited range of wind speeds, so that power generation by wind power tends to be sporadically and unpredictably available.

A wind turbine generator has a minimum wind speed which is required in order to overcome friction and other parasitic losses and drive the turbine and generator into sustained power generation. Further, a wind turbine generator generally has a maximum wind speed for safe power generation. If the wind speed rises above this maximum the wind turbine can be driven at an excessive speed, resulting in a risk of damage or failure of the wind turbine itself or the generator or other equipment driven by the wind turbine, either by being driven at too high a mechanical speed or by the generator producing more electrical power than the electrical power transfer equipment can safely handle. This situation is generally referred to as an overspeed condition.

In theory the same limits apply to a water turbine generator. However, in practice water current speeds are more predictable than wind speeds and vary over a much smaller range. As a result it is generally possible to calculate the absolute maximum water current speed that will be encountered at any specific location and design a water turbine generator to safely operate at this speed, so that an overspeed condition will not be encountered in a water turbine generator. However, where the water current speed can drop to a very low value or zero, for example when the current is tidal, there will be a minimum water speed required to drive the water turbine generator.

In horizontal axis wind turbines the risk of damage due to overspeed is generally avoided by feathering the turbine blades, that is, turning the turbine blades into an orientation where they do not generate any torque from the wind, so that the turbine can be slowed and stopped. Although feathering prevents damage to the turbine and generator it also stops power generation. It is not usually possible to feather a Darrieus vertical axis turbine so that a brake must be provided in order to slow down and stop the turbine in the event of an overspeed occurring, or in response to unsafe wind speeds where an overspeed condition would be expected to occur. Such slowing and stopping the turbine will stop power generation.

The buoy 1 according to the present invention generates power from the water turbine 4 in addition to the wind turbine 3. The water turbine 4 is driven by water currents, which will either be ocean or estuary currents, which are generally constantly flowing, or tidal currents, which have a variable flow which is almost totally predictable at any specific location. Accordingly, the buoy 1 can generate a reliable and predictable supply of power from the water turbine 4 independently of any fluctuations in the supply of power from the wind turbine 3 due to changes in wind speed.

When the buoy 1 is subject to a high wind speed which could drive the wind turbine 3 to overspeed, during a storm for example, rotation of the wind turbine 3 can be slowed by the power transmission system 7 taking power from the wind turbine 3 and using the power to drive the water turbine 4, in addition to the power from the wind turbine 3 being used to drive the generator 6. This allows the speed of the wind turbine 3 and the generator 6 to be limited to safe levels without stopping power generation even at high wind speeds.

With hindsight it might be expected that similar overspeed prevention could be provided to a wind turbine by applying a brake to the wind turbine. However, the use of a brake to prevent overspeed will generate large amounts of heat as excess energy collected by the wind turbine from the wind is dissipated, eventually causing the brake to overheat and fail. In contrast, in the present invention the excess energy collected by the wind turbine from the wind is dissipated into the water by drag of the blades of the driven water turbine 4. For all practical purposes the sea can be regarded as an infinite sink for dissipating this energy.

Thus, the present invention can generate power using the wind turbine across a wider range of wind speeds than would otherwise be the case, increasing the reliability of the supply of power from the buoy 1 and allowing the wind turbine 3 to generate more total power over it's lifetime.

The wind turbine 3 and the water turbine 4 are each provided with an emergency brake to stop the respective turbine 3 and 4 if necessary. Preferably the brakes are disc brakes. The emergency brakes can also be used to hold the respective turbines 3 or 4 stationary during maintainance or inspection of the buoy 1 by personel, for safety, because although Darrieus turbines will not usually self start it is possible for a Darrieus turbine to self start under certain extremely rare conditions. The emergency brakes are operated by the control system 9 to stop rotation of their respective turbines 3 and 4 in response to a detected overspeed situation where the speed of rotation of the respective turbine 3 or 4 exceeds a maximum threshold value. Further, the emergency brakes are operated to stop rotation of both turbines 3 and 4 in response to a loss of hydraulic pressure in the power transmission system 7. Such a pressure loss would indicate a major failure of the power transfer system 7 which could potentially allow a very rapid runaway increase in the speed of rotation of the turbines 3 and 4 as they are driven by the wind and current respectively without any of the driving energy being absorbed by the power transfer system 7. The brakes are preferably disc brakes spring loaded into a closed, applied position and held open by the control system 9 using hydraulic pressure from the power transmission system 7, so that the brakes can be selectively closed or opened under the control of the control system 9 but will fail safe into the closed position if hydraulic pressure in the power transmission system 7 is lost.

In the illustrated embodiment the wind turbine 3 is a Darrieus vertical axis turbine with five helical carbon fibre blades 3a supported by a central shaft 3b connected to the hydraulic pump 13.

The water turbine 4 is a Darrieus vertical axis turbine with five cast steel blades 4a mounted on a turntable rotor 4b mounted on a central shaft 4d connected to the hydraulic pump 14. The blades 4a of the water turbine 4 are tapered to allow them to shed water borne debris such as plastic bags or ropes. In order to allow the blades 4a to be inspected and cleaned they are mounted in slots 4c in the rotor 4b so that the blades 4a can be retracted upwardly through the slots 4c. The blades 4a can also be retracted upwardly through the slots 4c when the buoy 1 is being transported in order to reduce the length of the buoy 1, and to reduce the draft of the buoy 1 if it is being towed afloat. The slots 4c are located so that the blades 4a can be retracted upwards and pass through a gap between the buoy hull 2 and the skirt fender 5.

It is not required to be able to retract the blades 4a during normal operation of the water turbine 4. Accordingly, no automatic retraction mechanism is provided. The blades 4a can be bolted in place and retraction can be carried out when necessary by unbolting the blades 4a and lifting them using a winch or similar lifting equipment. After inspection and cleaning, or on deployment of the buoy 1, the blades 4a can be lowered into their operating position and bolted into place.

Different blade numbers, blade profiles or materials could be used for both turbines. Retractable blades for the water turbine are preferred, but this is not essential. Further, alternative retraction arrangements for the water turbine blades, such as hinged blades, could be used.

It is possible that the buoy hull 2 may be overtopped by waves in operation so that the buoy hull 2 and housing 8 are temporarily underwater. In general the buoy 1 is designed as far as possible to allow this without suffering any ill effects, using marine design techniques. In particular, in order to reduce the risk of damage to the wind turbine 3 the buoy 1 is fitted with at least one accelerometer. Based on the output of the at least one accelerometer, when the control system 9 judges that the buoy 1 is at risk of being overtopped the control system will shut down the wind turbine 3 and stop its rotation using the emergency brake and/or the hydraulic pump 13. The risk of damage to the wind turbine by being immersed in water is greater if the wind turbine is rotating when the immersion occurs.

The dimensions of the buoy 1 and the relative dimensions of the various parts thereof can be varied based on the amount of power the buoy 1 is intended to generate, the expected conditions at the intended deployment location, and the capabilities of the facility building the buoy 1. In particular the relative sizes of the wind turbine 3 and the water turbine 4 can be varied depending on the strength of the wind and water currents expected at the intended deployment location of the buoy 1. However, it is preferred that the lower ends of the blades 3a should be spaced sufficiently far above the upper surface or deck of the buoy hull 2 that there is no risk of persons standing on the buoy hull 2 being struck by the blades 3a.

It is expected that the buoy 1 will usually operate essentially autonomously under the control of the control system 9. However, the buoy 1 is preferably provided with communication means to allow the control system 9 to report any failure or problems requiring attention or to report operating parameters of the buoy 1 for remote review. Preferably the communication means also allows operating instructions to be sent to the buoy 1. For example, for safety the buoy 1 can be instructed to stop generating power and stop rotation of the turbines 3 and 4 when personnel are to board the buoy 1 for inspection or maintenance, or if the power connection between the buoy 1 and the external power network is scheduled to be disconnected for any reason the buoy 1 can stop generating power beforehand.

Approximate dimensions of one design of Buoy according to the invention are as follows:
Buoy Diameter = 12m
Wind Turbine Blade Chord = 1 m
Wind Turbine Blade Length = 24m
Water Turbine Blade Chord (Root) = 3m
Water Turbine Blade Length = 12m
Operating Draft = 13.5m
Deadweight = 100 Te
Wind Turbine Mechanical Power at 20 knot windspeed = 120 kW
Water Turbine Mechanical Power at 2.5 knots current = 300 kW

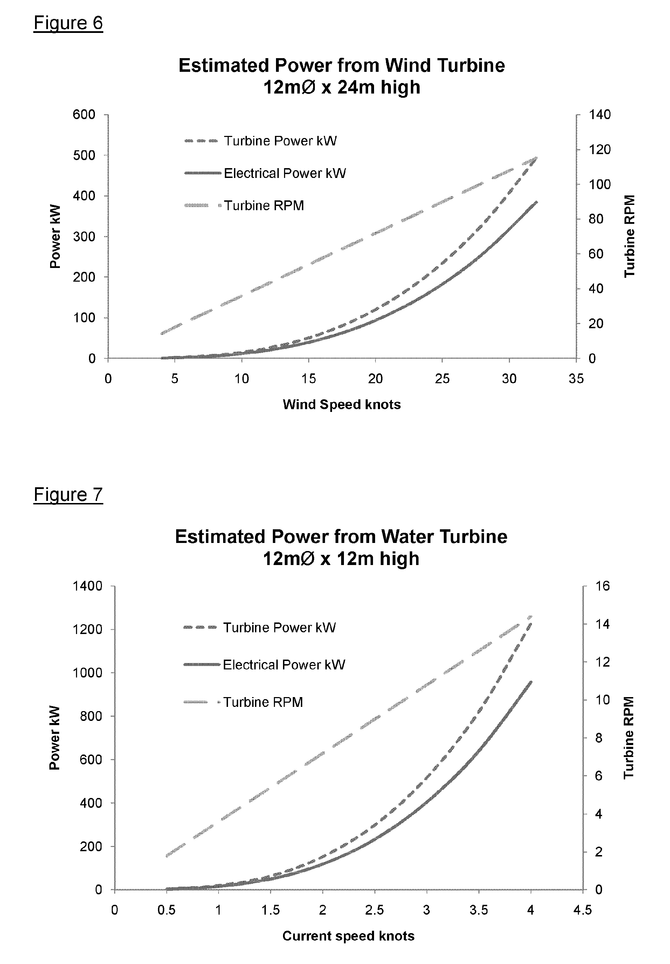

Figure 6 is a graph of estimated power output of the wind turbine against windspeed. Figure 7 is a graph of estimated power output of the water turbine against water current speed.

Larger or smaller buoys can be made to adapt to the site conditions and client demand.

In practice it may be preferred to use wind turbine blades with a maximum length of 12 m so that the blades can be transported in a standard shipping container. In the design above two 12m blades could be used instead of a 24m blade. Worldwide, the number of facilities able to manufacture carbon fibre wind turbine blades is expected to be much smaller than the number of facilities able to construct the rest of the buoy. Accordingly it is expected that it will often be necessary to transport the wind turbine blades a considerable distance to where the buoy is being constructed.

It is not essental that the wind turbine 3 and water turbine 4 are Darrieus turbines. Other types of vertical axis turbines could be used. If the wind turbine 3 is a Savonius turbine or another type of vertical axis turbine having self starting properties it will not be necessary for the power transfer system 6 to be able to drive the wind turbine 3 to start it. However, even if the water turbine 4 is a Savonius turbine or another type of vertical axis turbine having self starting properties it will still be necessary for the power transfer system 6 to be able to drive the water turbine 4 in order to allow power to be transferred from the wind turbine 3 to the water turbine 4 to prevent overspeeding.

Further, the wind turbine 3 and/or the water turbine 4 could mainly form a Darrieus turbine or other non self starting vertical axis turbine but have some parts forming a Savonius turbine or another self starting vertical axis turbine in order to allow the buoy 1 to be capable of self starting. For example, the rotor 4b of the water turbine 4 could be shaped to form a Savonius turbine in addition to the blades 4a forming a Darrieus turbine so that the water turbine 4 is able to self start.

It is not essential that the wind turbine is one turbine unit. Mutiple turbines could be mounted on the buoy. Further, such multiple turbines could be mounted on top of each other, either on a single vertical axis, or multiple vertical axes. The multiple turbines could drive a common hydralic pump or separate hydralic pumps.

Optionally, for large diameter water turbine systems, a second water turbine of smaller diameter could be mounted concentrically inside a Irger diameter main water turbine. This second water turbine may or may not be connected to the main water turbine shaft. If the second water turbine is not connected to the main turbine shaft it can drive an independent hydralic pump and be controlled in a similar manner to the main water turbine.

The turbines 3 and 4 must be mounted for rotation relative to the buoy hull 2 using suitable bearings and rotary seals preventing water ingress into the buoy hull 2. Further, waterproof hatches or other access means should be provided to allow set up, maintenance and repair of the buoy in service. The skilled person in the field of marine engineering will be well aware of many suitable arrangements and can select those most appropriate for the design and intended location of the buoy, as necessary.

For safety, the buoy 1 will usually be fitted with a navigation light and optionally a fog horn.

In order to prevent corrosion it is preferred to mount replaceable sacrificial aluminium anodes on the submerged part of the buoy 1 and water turbine 4.

In order to allow handling of the buoy 1 during construction and transport it is preferred to attach lifting pad eyes to the buoy hull 2.

The present invention provides a power generation buoy having both wind and water turbines able to generate electrical power while having a relatively low visual impact. The location of the buoy in the sea or other large body of water makes it easy to find a suitable site, while the cost and difficulty of constructing and placing the buoy and the impact on other marine activities is much lower than the conventional approach of locating a horizontal axis wind turbine on a tall concrete tower or locating a water turbine in a barrage or on the sea bed. Further, when the buoy is worn out or no longer required it can simply be towed away and scrapped or placed elsewhere as appropriate. Unlike a concrete tower or barrage there is no residual environmental impact or any requirement for demolition work other than the removal of the mooring anchors.

In an alternative embodiment the buoy 1 could be used without the wind turbine 3 so that the buoy 1 mounts the water turbine 4 only. The cost and difficulty of constructing and placing the buoy and the impact on other marine activities is much lower than the conventional approach of locating a water turbine in a barrage or on the sea bed. Further, when the buoy is worn out or no longer required it can simply be towed away and scrapped or placed elsewhere as appropriate. Unlike a barrage there is no residual environmental impact or any requirement for demolition work other than the removal of the mooring anchors.

In a further alternative embodiment the water turbine 4 can be replaced by an arrangement of downwardly extending blades or elements able to generate drag when rotated through the water but not forming a turbine able to be driven by a current passing over the blades or elements. Further, the blades or elements also should not generate any thrust which would tend to move the buoy. In this embodiment, energy will only be generated by the wind turbine. In operation the underwater blades or elements can be rotated through the water to dissipate energy in order to prevent overspeeding of the wind turbine so that the range of wind speeds at which the wind turbine can operate can be increased. This embodiment may be preferred, for example, for use in locations where there is insufficient water current to generate a worthwhile amount of power, in order to reduce cost of the buoy.

The embodiments described above relate to buoys generating and exporting electrical power. Although this is expected to be the most common use of the present invention it is possible that the electrical power could be consumed on board the buoy itself. The buoy could, for example, include an electrolysis plant to extract hydrogen from seawater for use as fuel, or a distillation plant to extract fresh water from seawater.

The description above refers to marine operation where the buoy is used at sea. Although this is expected to be the most common situation where the present invention is used it would of course be possible to use the present invention in any suitable body of water, such as a lake or river, and not only at sea.

A number of embodiments have been described herein. However, it will be understood by persons skilled in the art that other variants and modifications may be made without departing from the scope of the embodiments as defined in the claims appended hereto.

## Claims

1. An electrical power generating system comprising:
a wind turbine;
a support means supporting the wind turbine;
an underwater structure able to rotate relative to the support means;
a power transfer system; and
an electrical generator;
wherein the power transfer system is able to transfer power from the wind turbine to drive the generator to generate electricity; and
the power transfer system is able to transfer power from the wind turbine to drive the underwater structure to rotate.

2. The system according to claim 1, wherein the support means is a flotation body.

3. The system according to claim 1 or claim 2, wherein the system comprises a buoy.

4. The system according to claim 3, wherein the system comprises a moored buoy.

5. The system according to claim 4, wherein the system is moored in water using a Catenary Anchor Leg Mooring 'CALM' arrangement.

6. The system according to any preceding claim, wherein the underwater structure is a water turbine and the power transfer system is also able to transfer power from the water turbine to drive the generator to generate electricity.

7. The system according to claim 6, wherein the power transfer system is also able to transfer power from the water turbine to drive the wind turbine.

8. The system according to any preceding claim, wherein the wind turbine is a vertical axis wind turbine.

9. The system according to any preceding claim, wherein the water turbine is a vertical axis turbine.

10. The system according to claim 9 when dependent from claim 8, wherein the wind turbine and water turbine are coaxial.

11. The system according to any one of claims 8 to 10, wherein the wind turbine is a Darrieus turbine.

12. The system according to any one of claims 9 to 11, wherein the water turbine is a Darrieus turbine.

13. The system according to any preceding claim, wherein the power transfer system is hydraulic.

14. An electrical power generating buoy comprising:
a water turbine;
a floatation body supporting the water turbine;
a power transfer system; and
an electrical generator;
wherein the power transfer system is able to transfer power from the water turbine to drive the generator to generate electricity.

15. A buoy according to claim 14, wherein the water turbine is a vertical axis turbine and the buoy is moored in water using a Catenary Anchor Leg Mooring 'CALM' arrangement.

## Amended claims

### Amended claims in accordance with Rule 137(2) EPC.

**1.** An electrical power generating system comprising:
a wind turbine (3);
a support means (2) supporting the wind turbine;
an underwater structure able to rotate relative to the support means;
a power transfer system (7); and
an electrical generator (6);
wherein the power transfer system (7) is able to transfer power from the wind turbine (3) to drive the generator (6) to generate electricity; and
the power transfer system (7) is able to transfer power from the wind turbine (3) to drive the underwater structure to rotate.

**2.** The system according to claim 1, wherein the support means (2) is a flotation body.

**3.** The system according to claim 1 or claim 2, wherein the system comprises a buoy (1).

**4.** The system according to claim 3, wherein the system comprises a moored buoy (1).

**5.** The system according to claim 4, wherein the system is moored in water using a Catenary Anchor Leg Mooring 'CALM' arrangement.

**6.** The system according to any preceding claim, wherein the underwater structure is a water turbine (4) and the power transfer system (7) is also able to transfer power from the water turbine (4) to drive the generator (6) to generate electricity.

**7.** The system according to claim 6, wherein the power transfer system (7) is also able to transfer power from the water turbine (4) to drive the wind turbine (3).

**8.** The system according to any preceding claim, wherein the wind turbine (3) is a vertical axis wind turbine.

**9.** The system according to any preceding claim, wherein the water turbine (4) is a vertical axis turbine.

**10.** The system according to claim 9 when dependent from claim 8, wherein the wind turbine (3) and water turbine (4) are coaxial.

**11.** The system according to any one of claims 8 to 10, wherein the wind turbine (3) is a Darrieus turbine.

**12.** The system according to any one of claims 9 to 11, wherein the water turbine (4) is a Darrieus turbine.

**13.** The system according to any preceding claim, wherein the power transfer system (7) is hydraulic.
